# EUROPEAN PATENT SPECIFICATION

(11) **EP 4 008 029 B1**
(45) Date of publication and mention of the grant of the patent: **30.09.2026**
(21) Application number: 20727910.0
(22) Date of filing: 08.04.2020
(51) Int. Cl.: H01M 4/38, H01M 4/139, H01M 4/13, C04B 38/00, C01B 32/05, C04B 35/524, C04B 35/636, H01M 10/052, H01M 4/04, H01M 4/62

(54) **THE PREPARATION METHOD OF CATHODE MATERIAL FOR LITHIUM-SULFUR BATTERY**
HERSTELLUNGSVERFAHREN VON KATHODENMATERIAL FÜR LITHIUM-SCHWEFEL-BATTERIE
PROCÉDÉ DE PRÉPARATION DE MATÉRIAU DE CATHODE POUR BATTERIE AU LITHIUM-SOUFRE

(30) Priority: 01.08.2019 CZ 20190500
(43) Date of publication of application: 08.06.2022
(73) Proprietor: Tomas Bata University In Zlín, 76001 Zlín (CZ)
(72) Inventor: VARGÜN, Elif, Mentenese, Mugla (TR); SAHA, Petr, CZ-76001 Zlin, Mladcova (CZ); CHENG, Qilin, Shanghai Shanghai (CN); FEI, Haojie, CZ-76001 Zlin (CZ); KAZANTSEVA, Natalia, CZ-76001 Zlin, Mladcova (CZ); SAHA, Tomas, CZ-76001 Zlin, Mladcova (CZ); WANG, Gengchao, Shanghai, Shanghai (CN)
(74) Representative: Kreizlova, Dana
(86) International application number: PCT/CZ2020/050023
(87) International publication number: WO 2021/018323

(56) References cited:
- CN-A- 109 461 943
- CN-A- 109 759 113
- US-A1- 2013 065 127
- US-A1- 2014 017 569
- WANG LIPING ET AL: "Sulphur-doped ordered mesoporous carbon with enhanced electrocatalytic activity for the oxygen reduction reaction", JOURNAL OF ENERGY CHEMISTRY ELSEVIER, AMSTERDAM, NL, vol. 25, no. 4, 16 February 2016 (2016-02-16), pages 566 - 570, XP029668544, ISSN: 2095-4956, DOI: 10.1016/J.JECHEM.2016.02.012
- CHEN HUICHAO ET AL: "Simultaneous micropore development and nitrogen doping of ordered mesoporous carbons for enhanced supercapacitor and Li-S cathode performance", ELECTROCHIMICA ACTA, ELSEVIER, AMSTERDAM, NL, vol. 214, 9 August 2016 (2016-08-09), pages 231 - 240, XP029714862, ISSN: 0013-4686, DOI: 10.1016/J.ELECTACTA.2016.08.045
- ZHEN LI ET AL: "Status and prospects in sulfur-carbon composites as cathode materials for rechargeable lithium-sulfur batteries", CARBON., vol. 92, 1 October 2015 (2015-10-01), GB, pages 41 - 63, XP055390215, ISSN: 0008-6223, DOI: 10.1016/j.carbon.2015.03.008
- WANG XIN ET AL: "Mesoporous carbons: recent advances in synthesis and typical applications", RSC ADVANCES, vol. 5, no. 101, 1 January 2015 (2015-01-01), pages 83239 - 83285, XP055298088, ISSN: 2046-2069, DOI: 10.1039/C5RA16864C
- HUANG CHEN-CHIA ET AL: "Hydrogen storage in cobalt-embedded ordered mesoporous carbon", INTERNATIONAL JOURNAL OF HYDROGEN ENERGY, ELSEVIER SCIENCE PUBLISHERS B.V., BARKING, GB, vol. 38, no. 10, 12 February 2013 (2013-02-12), pages 3994 - 4002, XP028987829, ISSN: 0360-3199, DOI: 10.1016/J.IJHYDENE.2013.01.081
- GADIOU R ET AL: "Synthesis and properties of new nitrogen-doped nanostructured carbon materials obtained by templating of mesoporous silicas with aminosugars", JOURNAL OF PHYSICS AND CHEMISTRY OF SOLIDS, PERGAMON PRESS, LONDON, GB, vol. 69, no. 7, 1 July 2008 (2008-07-01), pages 1808 - 1814, XP022701771, ISSN: 0022-3697, [retrieved on 20080124], DOI: 10.1016/J.JPCS.2008.01.006

## Description

### Technical area

The present invention relates to the process of preparing a cathode for a lithium-sulphur (Li-S) battery.

### Current state of the art

The current US patent US9520594 deals with the process of producing electrode material for Li-S battery which is based on mesoporous carbon (CMK-3) prepared by the so-called rigid template method (template SBA-15) in the following sub-steps:
a) preparation of a template based on an inorganic material containing spherical nanoparticles and pores,
b) infiltration of the template pores with the precursor of the first variety of carbon,
c) carbonization of the precursor to form an inner layer of nanoparticles with primary microporosity,
d) infiltration of the remaining template pores with the precursor of the second variety of carbon,
e) carbonization of the precursor to form an outer layer with a secondary microporosity, which is lower than the primary microporosity of the inner layer,
f) removing of the template to form a carbon product with a composite layer structure comprising a relatively highly microporous inner layer of carbon with a free surface oriented towards the cavity, and an outer layer of carbon with a relatively low microporosity with the free surface oriented away from the cavity.

U.S. Patent Application US2013065127 (A1) discloses a sulphur cathode for the use in rechargeable batteries, consisting of an electrically active sulphur-containing material, an electrically conductive filler, and an electrically inactive component. The invention deals with rechargeable batteries containing this sulphur cathode. In a particular embodiment, the electrically conductive filler is a carbon/sulphur nanocomposite. A particular example of a carbon/sulphur nanocomposite is mesoporous carbon saturated with sulphur - CMK-3/S. Another type of mesoporous carbon is colloidal silica monolith (SCM), which can be prepared from commercial colloidal silica, e.g. 40 wt.% LUDOX^{®} HS-40. The larger SCM carbon pore size is expected to allow a significantly higher polysulfide absorption than in CMK-3.

Furthermore, it is also known that cathode performance can be improved by the synthesis of nitrogen-doped carbon, which will form a conductive porous matrix filled with a high amount of sulphur. For example, the synthesis of high-crushed nitrogen-doped graphene sheets with a pore volume of 5.4 cm³ /g is known in this issue, and doping of carbon with nitrogen has been shown to improve the electrochemical performance of sulphur-based cathodes. Nitrogen doping creates a strong bond between the oxygen functional groups of carbon and sulphur and also increases the adsorption of polysulfide lithium intermediates.

However, the application of nitrogen doping of the electrode material for a lithium-sulphur battery based on mesoporous carbon (CMK-3) is not yet known. Further relevant prior art is provided by Huang Chen-Chia et al ("Hydrogen storage in cobalt-embedded ordered mesoporous carbon", International Journal of Hydrogen Energy, 2013, XP028987829).

### Subject of invention

A possible solution of the aforementioned drawback can be the method of preparation of the cathode for a Li-S battery according to the invention. This cathode consists of a mesoporous carbon support structure with sulphur-filled pores. Its preparation, similarly to the methods already known, consists in incorporation (impregnation) of a low molecular weight (precursor) carbon into a solid SBA-15 template during the synthesis of the CMK-3 structure of the mesoporous carbon; the composite thus formed is completely carbonized and the SBA-15 template is subsequently removed.

The essence of the invention is that as a carbon source (precursor), a low molecular weight chitosan is incorporated into the solid SBA-15 template, which at the same time also serves as a nitrogen source used for the concurrent process of doping the carbon structure of the cathode with nitrogen atoms. The low molecular weight chitosan has preferably a molecular weight of 83027 X 10⁻²⁷ to 315502 X 10⁻²⁷ kg (i.e. 50,000 to 190,000 Da).

The rigid template SBA-15 is advantageously prepared by reacting a triblock copolymer of polyethylene oxide and polypropylene oxide in an alternating linear mode, expressed by the chemical formula HO(CH₂CH₂O)₂₀(CH₂CH(CH₃)O)₇₀(CH₂CH₂O)₂₀H) and tetraethyl orthosilicate (TEOS) in solution in the presence of hydrochloric acid. The product is isolated by filtration, dried and then calcined.

The low molecular weight chitosan is incorporated into the solid SBA-15 template by mixing the former and the latter in a weight ratio of 0.005 to 0.035:1 in an aqueous solution in the presence of acetic acid.

The incorporation/impregnation is carried out in two or more steps; the weight ratio of chitosan to template (SBA-15) in each step is 0.009 to 0.035:1.

The main advantage of the solution according to the invention is that the precursor - low molecular weight chitosan - also serves as the nitrogen source used for the concurrent process of doping the carbon structure of the cathode with nitrogen atoms. Nitrogen doping, like in the known processes in graphene layers, creates a strong bond between the oxygen functional groups of carbon and sulphur and also increases the adsorption of polysulfide lithium intermediates.

### Examples of technical application

### Example 1 (not claimed)

The method of preparing a cathode for a Li-S battery involving a mesoporous carbon support structure containing pores filled with sulphur consists in the synthesis of mesoporous carbon CMK-3, when the rigid template SBA-15 is impregnated with low molecular weight chitosan; the composite thus formed it is then completely carbonized and afterwards the SBA-15 template is removed. Chitosan with a molecular weight of 83027 X 10-27 to 315502 X 10-27 kg (i.e. 50,000 to 190,000 Da) used herein as a carbon precursor also serves as a nitrogen source used for the concurrent process of doping the carbon structure of the cathode with nitrogen atoms.

In a particular exemplary process, a rigid template SBA-15 is first prepared by placing 2 g of Pluronic P123 surfactant (triblock copolymer of polyethylene oxide and polypropylene oxide in an alternating linear mode with a molecular weight of 5800 g/mol, chemically expressed as HO(CH₂CH₂O)₂₀(CH₂CH(CH₃)O)₇₀(CH₂CH₂O)₂₀H), is dissolved in 60 mL of 2M HCl at 38 °C. Then, 4.2 g of TEOS is added to the above solution under vigorous stirring, and the mixture is stirred for 6 to 8 min. Afterwards, it is left to stand for 24 hours at 38 °C. Further, it is heated in an autoclave to 100 °C for 24 hours. The created highly ordered SBA-15 silica template is subsequently isolated by filtration, dried and calcined at 550 °C under an argon atmosphere.

In the next stage (incorporation of chitosan into the rigid template of SBA-15), the amount of 9 to 35 mg of chitosan with a molecular weight of 83027 X 10-27 to 315502 X 10-27 kg (i.e. 50,000 to 190,000 Da) is dissolved in 5 ml of water containing 1% acetic acid. Further, 1.0 g of SBA-15 silica template is added, dispersed in the above solution, and the mixture is stirred for 20 minutes. Then the mixture is dried in an oven for 12 hours at 100 °C and an additional 12 hours at 160 °C.

Afterwards, the resulting composite is completely carbonized at 1000 °C for 6 hours under argon. To remove the silica template, the composite is mixed in 5 wt.% solution of hydrofluoric acid at room temperature for 24 hours.

The carbon precursor - low molecular weight chitosan - also serves in the process as a nitrogen source used for the concurrent process of doping the carbon structure of the cathode with nitrogen atoms. Nitrogen doping, like in the known processes in graphene layers, creates a strong bond between the oxygen functional groups of carbon and sulphur, and also increases the adsorption of polysulfide lithium intermediates. This process substantially increases the electrochemical performance of the cathode.

### Example 2

In another exemplary embodiment, within the scope of claim 1, the preparation of a rigid SBA-15 template is similar to Example 1. The difference is that the rigid template SBA-15 is impregnated with chitosan in three steps by dissolving the amount of 9 to 35 mg of chitosan (molecular weight of 83027 X 10-27 to 315502 X 10-27 kg, i.e. 50,000 to 190,000 Da). in 15 ml of water containing 1% acetic acid in the first step. Then, 1.0 g of SBA-15 silica template is added, dispersed in one third of the above solution, and the mixture is stirred for 20 minutes. Then the product is dried in an oven for 12 hours at 100 °C and additional 12 hours at 160 ° C.

In the second step, the impregnation process is repeated with another 5 ml of the same solution and the same drying process follows. The third step is identical to the second one. Repeated impregnation increases saturation of the template.

The further procedure of carbonizing the composite and removing the template is identical to Example 1.

## Claims

1. The process for preparation of a cathode for a lithium-sulphur (Li-S) battery, consisting of a support structure based on mesoporous carbon with pores filled with sulphur, wherein during the synthesis of a CMK-3 structure of the mesoporous carbon, a low molecular carbon source precursor is incorporated into a solid SBA-15 template, prepared by reacting a triblock copolymer of polyethylene oxide and polypropylene oxide in an alternating linear mode expressed by chemical formula
HO(CH₂CH₂O)₂₀(CH₂CH(CH₃)O)₇₀(CH₂CH₂O)₂₀H)
with tetraethyl orthosilicate followed by calcination, where the precursor is incorporated into the solid SBA-15 template by mixing chitosan and SBA -15 template; the composite thus formed is completely carbonized and the SBA-15 template is subsequently removed, **characterized by** the incorporation of low molecular weight chitosan with a molecular weight of 8.3027 X 10-23 to 3.15502 X 10-22 kg, that is a molecular weight of 50,000 to 190,000 Da, into the solid SBA-15 template as a carbon precursor, which also serves as a nitrogen source used for the concurrent process of doping the carbon structure of the cathode with nitrogen atoms, wherein the chitosan incorporation is carried out in two or more impregnation steps, in which the weight ratio of chitosan to template SBA-15 is 0.009 to 0.035:1 in an aqueous solution in the presence of acetic acid.

## Patentansprüche

1. Herstellungsverfahren von Kathodenmaterial für eine Lithium-Schwefel-Batterie (Li-S), bestehend aus einer Trägerstruktur auf Basis von mesoporösem Kohlenstoff, dessen Poren mit Schwefel gefüllt sind, wobei während der Synthese der CMK-3-Struktur des mesoporösen Kohlenstoffs ein niedermolekularer Kohlenstoffquellenvorläufer in eine feste SBA-15-Template eingebracht wird, die durch Umsetzung eines Triblockcopolymers aus Polyethylenoxid und Polypropylenoxid mit alternierender linearer Struktur, ausgedrückt durch die chemische Formel
HO(CH₂CH₂O)₂₀(CH₂CH(CH₃)O)₇₀(CH₂CH₂O)₂₀H)
mit Tetraethylorthosilikat und nachfolgender Kalzinierung hergestellt wird, wobei der Vorläufer durch Vermischen von Chitosan mit der festen SBA-15-Template in diese eingebracht wird, der entstehende Verbund vollständig karbonisiert und anschließend die SBA-15-Template entfernt wird, **dadurch gekennzeichnet, dass** als Kohlenstoffvorläufer niedermolekulares Chitosan mit einer Molekülmasse von 8,3027 × 10⁻²³ bis 3,15502 × 10⁻²² kg (entsprechend 50.000 bis 190.000 Da) in die feste SBA-15-Template eingebracht wird, welches zugleich als Stickstoffquelle zur Dotierung der Kohlenstoffstruktur der Kathode mit Stickstoffatomen dient, wobei die Chitosan-Imprägnierung in zwei oder mehr Schritten erfolgt und das Gewichtsverhältnis von Chitosan zu SBA-15-Template 0,009 bis 0,035 : 1 in wässriger Lösung unter Zugabe von Essigsäure beträgt.

## Revendications

1. Le procédé de préparation de matériau de cathode pour batterie au lithium-soufre (Li-S), constituée d'une structure de support à base de carbone mésoporeux dont les pores sont remplis de soufre, dans lequel, au cours de la synthèse de la structure CMK-3 du carbone mésoporeux, un précurseur de source de carbone de faible masse moléculaire est introduit dans un gabarit solide SBA-15, préparé par réaction d'un copolymère tribloc d'oxyde de polyéthylène et d'oxyde de polypropylène à structure linéaire alternée, représenté par la formule chimique
HO(CH₂CH₂O)₂₀(CH₂CH(CH₃)O)₇₀(CH₂CH₂O)₂₀H)
avec de l'orthosilicate de tétraéthyle, suivie d'une calcination, ledit précurseur étant introduit dans le gabarit solide SBA-15 par mélange de chitosane et du gabarit SBA-15, le composite ainsi obtenu étant complètement carbonisé puis le gabarit SBA-15 étant ensuite éliminé, **caractérisé en ce que** du chitosane de faible masse moléculaire, présentant une masse moléculaire de 8,3027 × 10⁻²³ à 3,15502 × 10⁻²² kg, correspondant à une masse molaire de 50 000 à 190 000 Da, est introduit dans le gabarit solide SBA-15 en tant que précurseur de carbone, ledit chitosane servant également de source d'azote utilisée pour le procédé simultané de dopage de la structure carbonée de la cathode par des atomes d'azote, l'introduction du chitosane étant réalisée en deux ou plusieurs étapes d'imprégnation, dans lesquelles le rapport massique du chitosane au gabarit SBA-15 est de 0,009 à 0,035:1, dans une solution aqueuse en présence d'acide acétique.
